# EUROPEAN PATENT SPECIFICATION

(11) **EP 3 190 141 B1**
(45) Date of publication and mention of the grant of the patent: **24.07.2024**
(21) Application number: 17150883.1
(22) Date of filing: 10.01.2017
(51) Int. Cl.: C08G 75/0204, C07C 315/00, C07C 317/22, C07C 323/00, C08J 5/00, C08G 75/025

(54) **POLYMER**
POLYMER
POLYMÈRE

(30) Priority: 11.01.2016 US 201662277091 P; 23.12.2016 TW 105142916
(43) Date of publication of application: 12.07.2017
(73) Proprietor: Industrial Technology Research Institute, Chutung, Hsinchu 31040 (TW)
(72) Inventor: Ho, Po-Hsien, 112 Taipei City (TW); Lin, Chih-Hsiang, 105 Taipei City (TW); Chen, Meng-Hsin, 925 Pingtung County (TW); Fan, Cheng-Hsing, 709 Tainan City (TW); Kao, Hsin-Ching, 308 Hsinchu County (TW); Chang, Yih-Her, 308 Hsin Chu County (TW)
(74) Representative: Michalski Hüttermann & Partner Patentanwälte mbB

(56) References cited:
- EP-A1- 3 034 542
- EP-A1- 3 042 924
- WO-A1-2015/033936
- WO-A1-2015/033938
- US-A- 3 987 016
- TSUCHIDA E ET AL: "SYNTHESIS OF POLY(PHENYLENE SULFIDE) BY O2 OXIDATIVE POLYMERIZATION OF METHYL PHENYL SULFIDE", MACROMOLECULES, AMERICAN CHEMICAL SOCIETY, US, vol. 27, no. 4, 14 February 1994 (1994-02-14), pages 1057 - 1060, XP000427148, ISSN: 0024-9297, DOI: 10.1021/MA00082A027
- KIMIHISA YAMAMOTO ET AL: "Synthesis of Poly(sulfonium cation) by Oxidative Polymerization of Aryl Alkyl Sulfides", THE JOURNAL OF ORGANIC CHEMISTRY, vol. 60, no. 2, 1 January 1995 (1995-01-01), pages 452 - 453, XP055355369, ISSN: 0022-3263, DOI: 10.1021/jo00107a027
- KIMIHISA YAMAMOTO ET AL: "Aryl sulfide bond formation using the sulfoxide-acid system for synthesis of poly(p-phenylene sulfide) via poly(sulfonium cation) as a precursor", JOURNAL OF THE AMERICAN CHEMICAL SOCIETY, vol. 115, no. 13, 1 June 1993 (1993-06-01), pages 5819 - 5820, XP055355371, ISSN: 0002-7863, DOI: 10.1021/ja00066a058
- EISHUN TSUCHIDA ET AL: "SYNTHESIS OF HIGH MOLECULAR WEIGHT POLY(PHENYLENE SULFIDE) BY OXIDATIVE POLYMERIZATION VIA POLY(SULFONIUM CATION) FROM METHYL PHENYL SULFOXIDE", MACROMOLECULES, AMERICAN CHEMICAL SOCIETY, US, vol. 26, no. 26, 20 December 1993 (1993-12-20), pages 7144 - 7148, XP000416281, ISSN: 0024-9297, DOI: 10.1021/MA00078A005

## Description

### TECHNICAL FIELD

The disclosure relates to a polymer, and in particular to a polyarylene sulfide (PAS) or a salt thereof.

### BACKGROUND

Polyarylene sulfide (PAS) is a material with good physical characteristics such as thermal resistance, chemical resistance, flame resistance, and electrical insulation characteristics. Thus, polyarylene sulfide (PAS) can be used in computer accessories and auto accessories; as a coating for parts that come into contact with corrosive chemicals; and as industrial fibers having chemical resistance.

One conventional method for producing polyarylene sulfide (PAS) is the halogen-containing process that, in principle, results in a low yield of polyarylene sulfide (PAS) and produces unrecyclable halogen-containing byproducts that can cause environmental pollution. In addition, conventional polyarylene sulfides (PAS) with two different repeating units are generally arranged in a random fashion, so that the thermal resistance, chemical resistance, flame resistance, and electrical insulation characteristics of the conventional polyarylene sulfides cannot be enhanced.

The publication Eishun Tsuchida et al: "Syntehsis of Poly(phenylene sulfide) by O2 Oxidative Polymerization of Methyl Phenyl Sulfide", Macromolecules, American Chemical Society, Vol 27, no. 4, 14 February 1994, 1057-1060, DOI: 10.1021/MA00082A027 describes the preparation of poly(p-phenylene sulifde) by the Ce-catalyzed O₂ polymerization of a sulfide via a soluble precursor.

The publication Kimihisa Yamamoto et al: "Synthesis of Poly(sulfonium cation) by Oxidative Polymerization of Aryl Alkyl Sulfides", Journal of Organic Chemistry, Vol 60, no. 2, 1 January 1995, 452-453, DOI: 10.1021/jo00107a027 describes a method that yields first a sulfonium compound and then a poly(arylene sulfide) by the deaklylation of a poly(sulfonium cation) through oxidative polymerization.

The publication Kimihisa Yamamoto et al: "Aryl Sulfide Bond Formation Using the Sulfoxide-Acid System for Synthesis of PPS via Poly(sulfonium cation) as a Precursor", Journal of the American Chemical Society, Vol 115, no. 13, 1 June 1993, 5819-5820, DOI: 10.1021/ja00066a058 describes a successful attempt to synthesize PPS via soluble poly(methyl-(4-phenylthio)phenylsulfonium cation) intermediate.

The publication Eishun Tsuchida et al: "Syntehsis of High Molecular Weight Poly(phenylene sulfide) by Oxidative Polymerization via Poly(sulfonium cation) from Methyl Phenyl Sulfoxide", Macromolecules, American Chemical Society, Vol 26, no. 26, 20 December 1993, 7144-7148, DOI: 10.1021/MA00078A005 describes that the high molecular weight poly(phenylene sulfide) (PPS), Mw > 2 × 10⁵ was synthesized via a poly(sulfonium cation) through oxidative polymerization of methyl 4-(phenylthio)phenyl sulfoxide, wherein polymerization proceeds in protic acid homogeneously.

Document WO 2015/033936 A1 relates to a polyarylene sulfide resin manufacturing method comprising: a process for obtaining a poly(arylene sulfonium salt) having specified constituent units by reacting a sulfoxide with a specific aromatic compound; and a process for obtaining a polyarylene sulfide resin having specified constituent units by dealkylating or dearylating the poly(arylene sulfonium salt).

Document WO 2015/033938 A1 elates to a polyarylene sulfide resin manufacturing method comprising a step for obtaining a polyarylene sulfide resin having constituent units by reacting a poly(arylene sulfonium salt), which has constituent units, with an aliphatic amide compound.

### SUMMARY

The invention is defined by the features of the independent claims.

According to embodiments of the disclosure, the disclosure provides a polymer having a repeating unit having a structure represented by Formula (I): 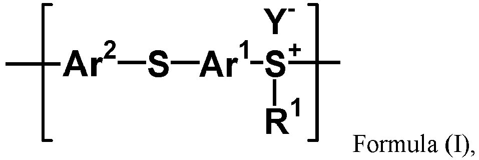 wherein Ar¹ and Ar² are independently 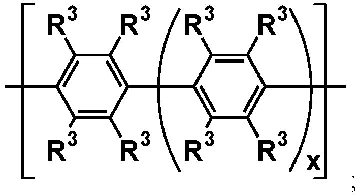 x is 0, 1, or 2; R³ is hydrogen, Y⁻ is R²SO₃⁻ or ClO₄⁻; R¹ is C₁₋₆ alkyl group; Ar¹ and Ar² are different; and, R² is C₁₋₆ alkyl group, substituted or unsubstituted aromatic ring, or C₁₋₆ haloalkyl.

A detailed description is given in the following embodiments with reference to the accompanying drawings.

Embodiments of the disclosure provide a polymer, such as polyarylene sulfide (PAS) or a salt thereof. According to embodiments of the disclosure, the main chain of the polymer of the disclosure consists of different aryl groups alternately arranged. Therefore, the polymer of the disclosure exhibits relatively high crystallinity and melting point (such as larger than or equal to about 330°C). Moreover, the thermal resistance, chemical resistance, flame resistance, and electrical insulation characteristics of the polymer are improved.

According to embodiments of the disclosure, the polymer of the disclosure can have a repeating unit having a structure represented by Formula (I): 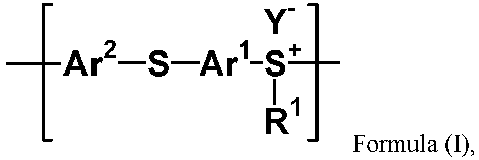 wherein Ar¹ and Ar² are independently 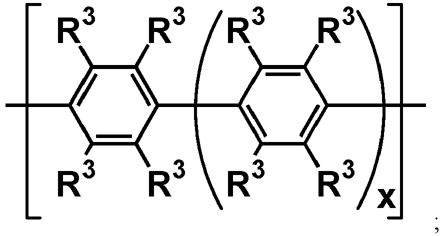 x is 0, 1, or 2; R³ is hydrogen, Y⁻ is R²SO₃⁻ or ClO₄⁻; R¹ is C₁₋₆ alkyl group; Ar¹ and Ar² are different; and, R² is C₁₋₆ alkyl group, substituted or unsubstituted aromatic ring, or C₁₋₆ haloalkyl. According to embodiments of the disclosure, the substituted aromatic ring means that at least one hydrogen atom bonded to carbon atoms of the aromatic ring can be replaced with C₁₋₆ alkyl group. In comparative examples not falling under the scope of the invention the polymer can have a repeating unit having a structure represented by Formula (II): 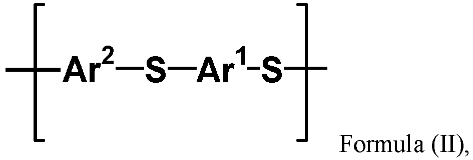 wherein Ar¹ and Ar² can be independently substituted or unsubstituted aryl diradical; Y⁻ can be R²SO₃⁻ or ClO₄⁻; R¹ can be C₁₋₆ alkyl group; Ar¹ and Ar² are different; and R² can be C₁₋₆ alkyl group, substituted or unsubstituted aromatic ring, or C₁₋₆ haloalkyl group. Herein, a substituted aryl diradical means that at least one hydrogen atom bonded to carbon atoms of the aryl diradical can be replaced with C₁₋₆ alkyl group.

According to embodiments of the disclosure, Ar¹ and Ar² can be independently unsubstituted phenylene or biphenylene. In comparative examples not falling under the scope of the invention Ar¹ and Ar² can be independently unsubstituted naphthylene, thienylene, indolylene, phenanthrenylene, indenylene, anthracenylene, or fluorenylene.

According to embodiments of the disclosure, C₁₋₆ alkyl group of the disclosure can be a linear or branched C₁₋₆ alkyl group. For example, R¹ can be methyl, ethyl, propyl, isopropyl, n-butyl, t-butyl, sec-butyl, isobutyl, pentyl, or hexyl.

According to embodiments of the disclosure, Ar¹ and Ar² are independently 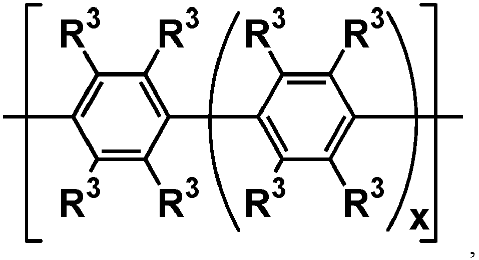 x is 0, 1, or 2; R³ is hydrogen. In comparative examples not falling under the scope of the invention R³ can be independently C₁₋₆ alkyl group for example methyl, ethyl, propyl, isopropyl, n-butyl, t-butyl, sec-butyl, isobutyl, pentyl, or hexyl.

According to embodiments of the disclosure, the repeating unit having a structure represented by Formula (I) can be 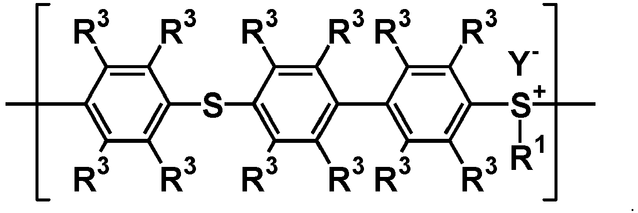 In comparative embodiments not falling under the scope of the invention the repeating unit having a structure represented by Formula (II) can be 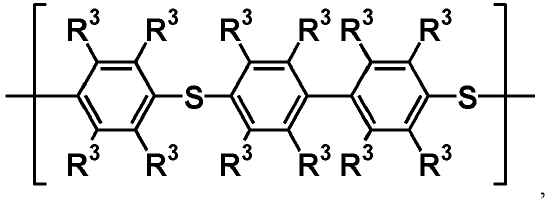 wherein R¹, R³, and Y⁻ have the same definition as above.

According to embodiments of the disclosure, the degree of polymerization of the polymer of the disclosure can be adjusted. For example, the polymer of the disclosure can have a number average molecular weight from about 600 to 120,000, or have a number average molecular weight from about 10,000 to 30,000.

According to embodiments of the disclosure, the method for preparing the polymer of the disclosure includes reacting a compound having a structure represented by Formula (III) with acid, obtaining a polymer with a repeating unit having a structure represented by Formula (I): 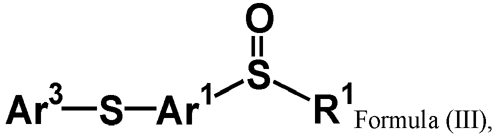 wherein Ar¹ can be unsubstituted aryl diradical, such as unsubstituted phenylene or biphenylene. In comparative embodiments not falling under the scope of the invention Ar¹ can be naphthylene, thienylene, indolylene, phenanthrenylene, indenylene, anthracenylene, or fluorenylene; Ar³ can be unsubstituted aryl group, such as unsubstituted phenyl group or biphenyl group. In comparative embodiments not falling under the scope of the invention, Ar³ can be thienyl group, indolyl group, phenanthrenyl group, indenyl group, anthracenyl group, or fluorenylene group. A substituted aryl group means that at least one hydrogen atom bonded to carbon atoms of the aryl group can be replaced with C₁₋₆ alkyl group. Ar¹ and Ar³ can be derived from different compounds. For example, when Ar¹ is phenylene, Ar³ is not phenyl group. The aforementioned acid can be sulfuric acid, methanesulfonic acid, benzenesulfonic acid, p-toluenesulfonic acid, or trifluoromethanesulfonic acid. The acid can react with the compound having a structure represented by Formula (III). In addition, the excessive acid can also serve as the reaction solvent.

Furthermore, the anionic ion (Y⁻) of the polymer with a repeating unit having a structure represented by Formula (I) can be further replaced with other anionic ion (such as CH₃SO₃⁻), obtaining a polymer with other anionic ion.

Moreover, the polymer with a repeating unit having a structure represented by Formula (I) can be further reacted with a nucleophile to undergo a dealkylation, obtaining polymer with a repeating unit having a structure represented by Formula (II). According to embodiments of the disclosure, the nucleophile can be metal halide, metal hydroxide, alcohol, amine (such as secondary amine or tertiary amine), or thiol. For example, the nucleophile can be sodium chloride, potassium chloride, aluminum chloride, or 4-methylpyridine.

The inventive concept of the disclosure may be embodied in various forms without being limited to the exemplary embodiments set forth herein.

### Example 1:

0.7g of methyl phenyl sulfoxide and 1g of methyl biphenyl sulfide were added into a reaction bottle under a nitrogen atmosphere, and then cooled to 0°C. Next, 10ml of methanesulfonic acid was added slowly into the reaction bottle, and then stirred for 30min. After raising the temperature back to room temperature, the mixture was stirred for 20hr. Next, the result was poured into 40ml of perchloric acid, and then stirred for 1hr. Next, the mixture was extracted three times using 50ml of dichloromethane and 100ml of water as the extraction solvent, and then the organic phase was collected. After drying, filtering and concentrating the organic phase, Compound (1), with a yield of about 92%, was obtained. The synthesis pathway of the above reaction was as follows:

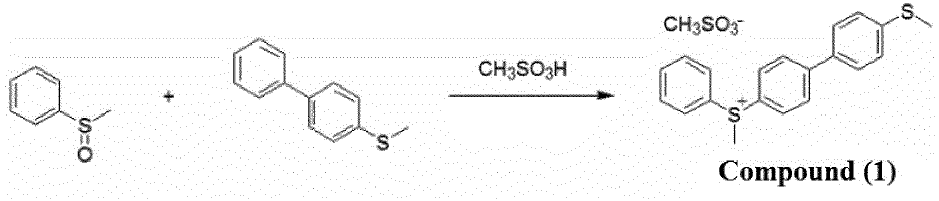

Compound (1) was analyzed by nuclear magnetic resonance (NMR) spectroscopy and the result is as follows: ¹H NMR (400MHz, ppm, CDCl₃): 2.48 (-CH₃, s), 3.67 (sulfonium-CH₃, s), 7.40-7.94 (aromatic H, 13H, m). Furthermore, Compound (1) was analyzed by liquid chromatography-mass spectrometry (LC-MS) and the result is as follows: m/z=323 (excluding anionic ion CH₃SO₃⁻).

Next, 1.9g of Compound (1) and 30ml of acetic acid were added into a reaction bottle under a nitrogen atmosphere. After stirring for several minutes, 2.02ml of hydrogen peroxide was added slowly into the reaction bottle. After stirring for 90min, the result was extracted three times using 50ml of dichloromethane and 100ml of water as the extraction solvent, and then the organic phase was collected. After drying, filtering and concentrating the organic phase, Compound (2) (orange), with a yield of about 92%, was obtained. Next, 10ml of 4-methylpyridine and Compound (2) were added into a reaction bottle under a nitrogen atmosphere, and then stirred for 30min. After heating to reflux for 20min, Compound (3) was obtained. The synthesis pathway of the above reaction was as follows:

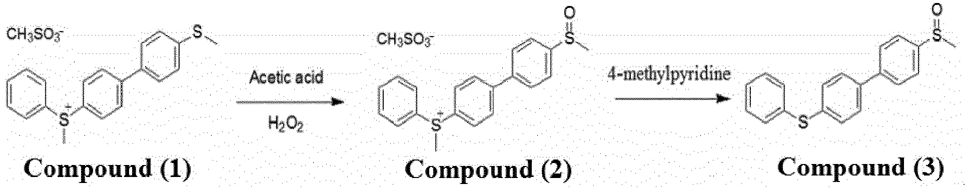

Compound (3) was analyzed by nuclear magnetic resonance (NMR) spectroscopy and the result is as follows: ¹H NMR (400MHz, ppm, CDCl₃): 2.72 (-CH₃, s), 7.38-7.63 (aromatic H, 13H, m). Furthermore, Compound (3) was analyzed by liquid chromatography-mass spectrometry (LC-MS) and the result is as follows: m/z=325(M + H⁺), 347(M + Na⁺), and 671(2*M + Na⁺) (M represents molecular weight).

Next, 1g of Compound (3) was added into a reaction bottle under a nitrogen atmosphere, and then cooled to 0 °C. Next, 15ml of trifluoromethanesulfonic acid was added slowly into the reaction bottle, and then stirred for 2min. After raising the temperature back to about 18°C, the result was poured into deionized water at 0°C, and a white precipitate was formed. Next, the white precipitate was collected and washed with deionized water several times until the white precipitate was substantially neutral. After drying the white precipitate by vacuum drying for 6hr, Polymer (1), with a yield of about 100%, was obtained. Next, 1g of Polymer (1) was added into a reaction bottle under a nitrogen atmosphere, and then 10ml of 4-methylpyridine was slowly added into the reaction bottle. After stirring at room temperature for 30min, the reaction bottle was heated to reflux at 150°C. After stirring for 5hr, the reaction bottle was cooled to room temperature, and then the result was poured into 200ml of methanol (containing 10% HCl), and a white precipitate was formed. Next, the white precipitate was collected, obtaining Polymer (2), with a yield of about 98%. The synthesis pathway of the above reaction was as follows:

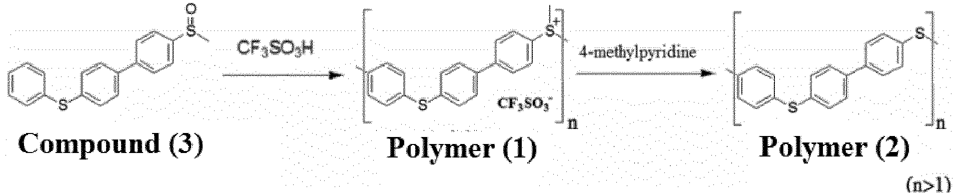

After measuring, the number average molecular weight of Polymer (1) (or Polymer (2)) was about 17,000 to 19,000.

Next, the properties of Polymer (2) were measured by a differential scanning calorimetry (DSC), and the result shows that Polymer (2) has a melting temperature (Tm) of about 330°C and a recrystallization temperature on cooling (Tcc) of about 251°C. Next, Polymer (2) was analyzed by Fourier-transform infrared (FT-IR) spectroscopy, and the result shows that the strong absorption peaks are 3023, 1593, 1472, 1388, 1090, 1006, 808(cm⁻¹).

Accordingly, since the main chain of the polymer of the disclosure (such as polyarylene sulfide (PAS) or a salt thereof) consists of different aryl groups alternately arranged, the polymer of the disclosure exhibits relatively high crystallinity and melting point (such as larger than or equal to about 330°C). Moreover, the thermal resistance, chemical resistance, and flame resistance of the polymer are improved.

## Claims

1. A polymer, which has a repeating unit having a structure represented by Formula (I) 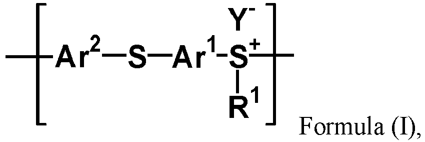 wherein Ar¹ and Ar² are independently 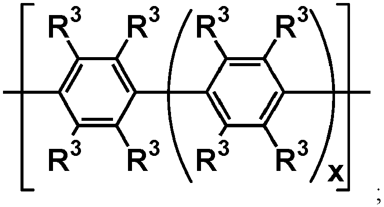 x is 0, 1, or 2; R³ is hydrogen, Y⁻ is R²SO₃⁻ or ClO₄⁻; R¹ is C₁₋₆ alkyl group; Ar¹ and Ar² are different; and, R² is C₁₋₆ alkyl group, substituted or unsubstituted aromatic ring, or C₁₋₆ haloalkyl.

2. The polymer as claimed in Claim 1, wherein R¹ is methyl, ethyl, propyl, isopropyl, n-butyl, t-butyl, sec-butyl, isobutyl, pentyl, or hexyl.

3. The polymer as claimed in Claim 1, wherein the repeating unit having a structure represented by Formula (I) is 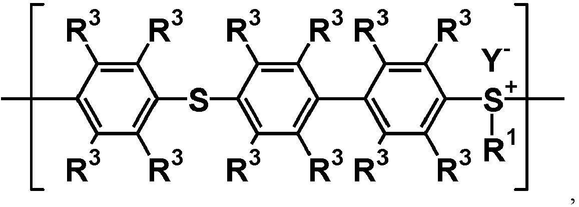 wherein R¹ is C₁₋₆ alkyl group; R³ is independently hydrogen; and, Y⁻ is R²SO₃⁻ or ClO₄⁻.

## Patentansprüche

1. Polymer, das eine Wiederholungseinheit mit einer durch Formel (I) dargestellten Struktur aufweist 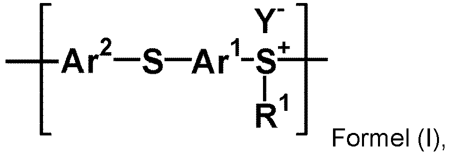 wobei Ar¹ und Ar² unabhängig voneinander 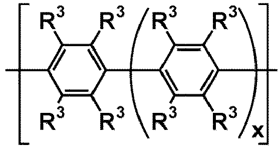 sind, x = 0, 1 oder 2 ist; R³ Wasserstoff ist, Y⁻ R²SO₃⁻ oder ClO₄⁻ ist; R¹ eine C₁₋₆-Alkylgruppe ist; Ar¹ und Ar² verschieden sind; und R² eine C₁₋₆-Alkylgruppe, ein substituierter oder unsubstituierter aromatischer Ring oder ein C₁₋₆-Halogenalkyl ist.

2. Polymer nach Anspruch 1, wobei R¹ Methyl, Ethyl, Propyl, Isopropyl, n-Butyl, t-Butyl, sec-Butyl, Isobutyl, Pentyl oder Hexyl ist.

3. Polymer nach Anspruch 1, wobei die Wiederholungseinheit mit einer durch Formel (I) dargestellten Struktur 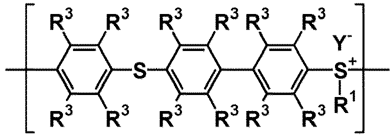 ist, wobei R¹ eine C₁₋₆-Alkylgruppe ist; R³ unabhängig Wasserstoff ist; und Y⁻ R²SO₃⁻ oder ClO₄⁻ ist.

## Revendications

1. Polymère, qui comporte un motif de répétition ayant une structure représentée par la Formule (I) 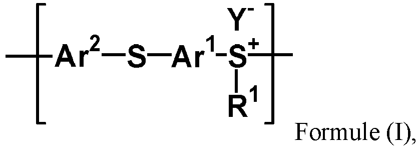
dans lequel Ar¹ et Ar² représentent indépendamment 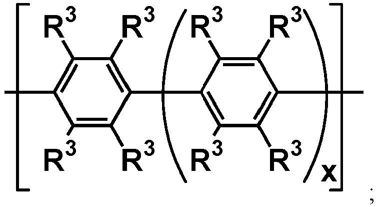 x représente 0, 1 ou 2 ;
R³ représente un hydrogène, Y⁻ représente R²SO₃⁻ ou ClO₄⁻ ; R¹ représente un groupement alkyle en C₁₋₆ ; Ar¹ et Ar² sont différents ; et R² représente un groupement alkyle en C₁₋₆, un cycle aromatique substitué ou non substitué ou un halogénoalkyle en C₁₋₆.

2. Polymère selon la revendication 1, dans lequel R¹ représente un méthyle, un éthyle, un propyle, un isopropyle, un n-butyle, un t-butyle, un sec-butyle, un isobutyle, un pentyle ou un hexyle.

3. Polymère selon la revendication 1, dans lequel le motif de répétition ayant une structure représentée par la Formule (I) est 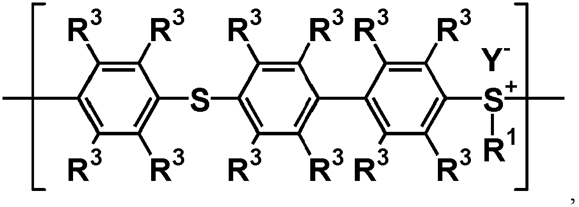 dans lequel R¹ représente un groupement alkyle en C₁₋₆ ; R³ représente indépendamment un hydrogène ; et Y⁻ représente R²SO₃⁻ ou ClO₄⁻.
